# DEMANDE DE BREVET EUROPEEN

(11) **EP 1 724 185 A1**
(43) Date de publication de la demande: **22.11.2006**
(21) Numéro de dépôt: 06290786.0
(22) Date de dépôt: 15.05.2006
(51) Int. Cl.: B62D 29/00, B29C 45/14

(54) **Ensemble d'ossature pour véhicule automobile, et véhicule automobile correspondant**

(30) Priorité: 16.05.2005 FR 0504899
(71) Demandeur: Faurecia Bloc Avant, 92000 Nanterre (FR)
(72) Inventeur: Riviere, Caroline, 25700 Valentigney (FR); Berne, Sébastien, 70400 Luze (FR); Mary, Raphaël, 85110 Schelldorf (DE)
(74) Mandataire: Blot, Philippe Robert Emile

(57) **Abrégé**

Cet ensemble d'ossature est du type comprenant :
- au moins un élément structurel métallique (4) possédant au moins deux tôles (22, 24) délimitant entre elles une structure en caisson, au moins une (24) des tôles (22, 24) comprenant une partie renfoncée (44) comprenant une zone (48) en contact avec une zone (50) de l'autre tôle (22), les deux zones en contact (48, 50) des tôles (22, 24) possédant des orifices (52, 54) en regard ; et
- au moins un corps en matière plastique (60) traversant les orifices (52,54).

Selon un aspect de l'invention, l'ensemble d'ossature comprend au moins un élément structurel en matière plastique (6) comprenant une portion de liaison (18) entourant extérieurement la structure en caisson au droit des zones en contact (48, 50), le corps en matière plastique (60) étant venu de matière avec la portion de liaison (18).

Application notamment aux faces avant de véhicule automobile.

## Description

La présente invention concerne un ensemble d'ossature pour véhicule automobile, du type comprenant :
- au moins un élément structurel métallique possédant au moins deux tôles délimitant entre elles une structure en caisson allongé de section transversale fermée, au moins une des tôles comprenant une partie renfoncée comprenant une zone en contact avec une zone en regard de l'autre tôle, les deux zones en contact possédant des orifices en regard ; et
- au moins un corps en matière plastique traversant les orifices pour lier les tôles entre elles.

Le document US 6 503 585 décrit un élément structurel pour véhicule automobile constitué de deux tôles métalliques liées entre elles par des rivets en matière plastique traversant des orifices formés au fond de renfoncements ménagés dans les tôles, et en contact entre eux.

Un tel élément structurel ne permet néanmoins pas d'obtenir un ensemble d'ossature, comprenant plusieurs éléments structurels, qui soit à la fois léger, de coût de fabrication faible et de résistance satisfaisante.

Un but de l'invention est donc de fournir un ensemble d'ossature pour véhicule automobile, qui soit léger, de coût de fabrication faible et de résistance satisfaisante.

A cet effet, l'invention propose un ensemble d'ossature du type précité, caractérisé en ce qu'il comprend au moins un élément structurel en matière plastique comprenant une portion de liaison entourant extérieurement la structure en caisson au droit des zones en contact de façon à lier l'élément structurel en matière plastique et l'élément structurel métallique entre eux, le corps en matière plastique étant venu de matière avec la portion de liaison.

Selon d'autres modes de réalisation, l'ensemble d'ossature comprend une ou plusieurs des caractéristiques suivantes, prise(s) isolément ou selon toutes les combinaisons techniquement possibles :
- chaque tôle comprend une partie renfoncée, les parties renfoncées des tôles étant en contact mutuel et munies d'orifices en regard traversés par un corps en matière plastique de liaison venu de matière avec la portion de liaison ;
- la ou chaque partie renfoncée définit une cavité ouverte sur une surface externe de la structure en caisson, la portion de liaison comprenant des nervures de renfort s'étendant à l'intérieur de la cavité ;
- les zones en contact possèdent une pluralité d'orifices correspondant en regard, les orifices de chaque paire d'orifices correspondants étant traversés par un corps en matière plastique de liaison venu de matière avec la portion de liaison ; et
- il comprend des rivets en matière plastique venus de matière avec la portion de liaison, et traversant des orifices ménagés dans des bords en contact des tôles s'étendant le long de la structure en caisson, pour lier les tôles entre elles.

L'invention concerne encore un véhicule automobile comprenant un ensemble d'ossature tel que défini ci-dessus.

L'invention et ses avantages seront mieux compris à la lecture de la description qui va suivre, donnée uniquement à titre d'exemple, et faite en se référant aux dessins annexés, sur lesquels :
- les figures 1 et 2 sont des vues schématiques en perspective, respectivement de face et arrière, d'un ensemble d'ossature conforme à l'invention, comprenant une traverse métallique et deux montants en matière plastique ;
- la figure 3 est une vue schématique en perspective, éclatée, de la traverse ;
- les figures 4 et 5 sont des vues en coupe, respectivement dans le plan IV-IV et le plan V-V, de l'ensemble d'ossature de la figure 2 ; et
- la figure 6 est une vue analogue à celle de la figure 5, illustrant un ensemble d'ossature selon une variante de l'invention.

Dans tout ce qui suit, les orientations sont les orientations habituelles d'un véhicule automobile.

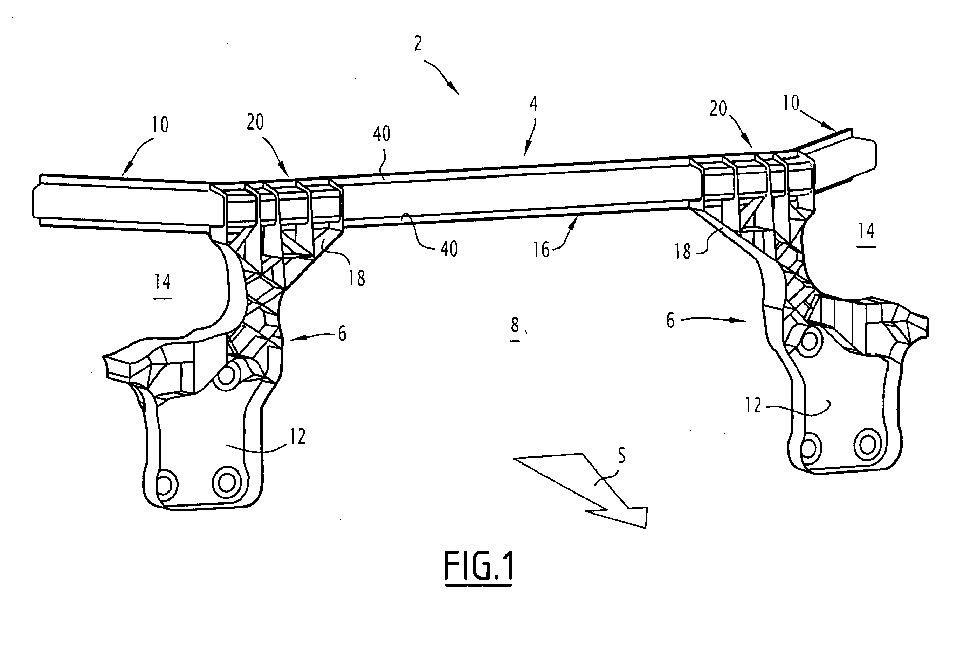

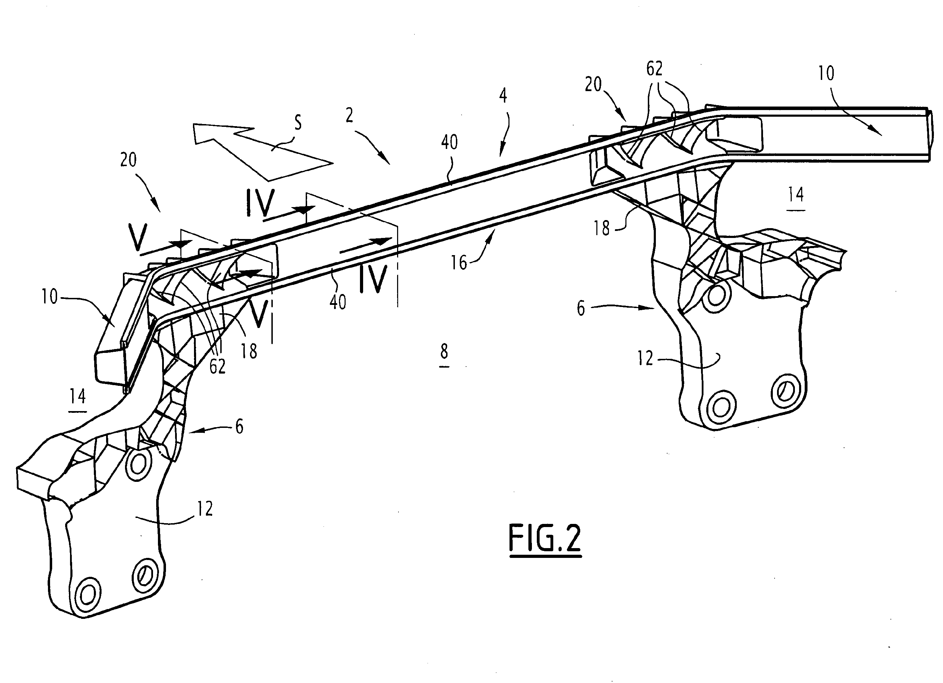

Ainsi, les termes « avant », « arrière », « latéral », « droite », « gauche », « horizontal », « vertical », « supérieur » et « inférieur » s'entendent par rapport à la position d'un conducteur et au sens de déplacement du véhicule en marche avant, matérialisé par une flèche S sur les figures 1 et 2.

En se référant aux figures 1 et 2, l'ensemble d'ossature 2 comprend une traverse tubulaire métallique supérieure 4, qui s'étend sensiblement horizontalement, et deux montants latéraux en matière plastique 6, qui s'étendent sensiblement verticalement.

Les deux montants 6 sont espacés latéralement l'un de l'autre, et s'étendent vers le bas à partir de la traverse 4.

Un tel ensemble d'ossature 2 constitue une face avant de véhicule automobile, et est destiné à être monté à l'avant d'un véhicule automobile pour supporter divers équipements tels que des blocs optiques, un groupe moto-ventilateur, un radiateur, un condenseur...

Ainsi, les montants 6 délimitent entre eux un espace central 8 de réception, par exemple d'un radiateur, d'un condenseur et d'un groupe moto-ventilateur.

De même, les portions d'extrémité 10 de la traverse 4 définissent, avec des platines de support 12 des montants 6, s'étendant latéralement vers l'extérieur, des espaces 14 de réception de blocs optiques.

La traverse 4 comprend une portion centrale 16 sensiblement rectiligne, les portions d'extrémité 10 étant recourbées vers l'arrière par rapport à la portion centrale 16.

Chaque montant 6 comprend, à son extrémité supérieure, une portion de liaison 18 fixée sur un tronçon 20 de la portion centrale 16, adjacent à une portion d'extrémité 10. Les deux tronçons 20 sont espacés latéralement.

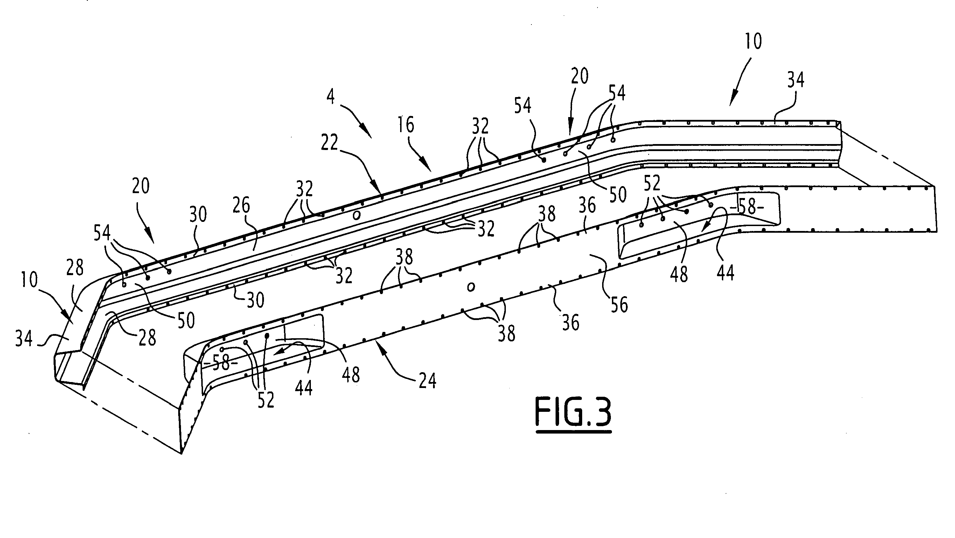

En se référant à la figure 3, la traverse 4 comprend deux tôles métalliques embouties 22, 24 s'étendant suivant la longueur de la traverse 4.

La tôle 22 possède une section transversale en « U » ouverte vers l'arrière, et comprend une âme 26 sensiblement verticale, et deux ailes 28 sensiblement horizontales s'étendant vers l'arrière à partir de l'âme 26. Chaque aile 28 est munie d'un bord arrière 30 replié vers l'extérieur de la tôle 22, et pourvu d'orifices de liaison 32 répartis le long de celui-ci.

Les portions d'extrémité 34 de la tôle 22 sont recourbées vers l'arrière.

La tôle 24 est disposée de façon à fermer l'ouverture arrière de la tôle 22, de sorte que les tôles 22, 24 forment une structure en caisson allongé de section transversale carrée s'étendant sur sensiblement tout la longueur de la traverse 4, et définie par l'âme 26 et la tôle 24 verticales, reliées entre elles par les ailes 28 horizontales.

La tôle 24 comprend des bords supérieur et inférieur 36 en contact avec les bords 30, et pourvus d'orifices de liaison 38 situés en regard des orifices 32.

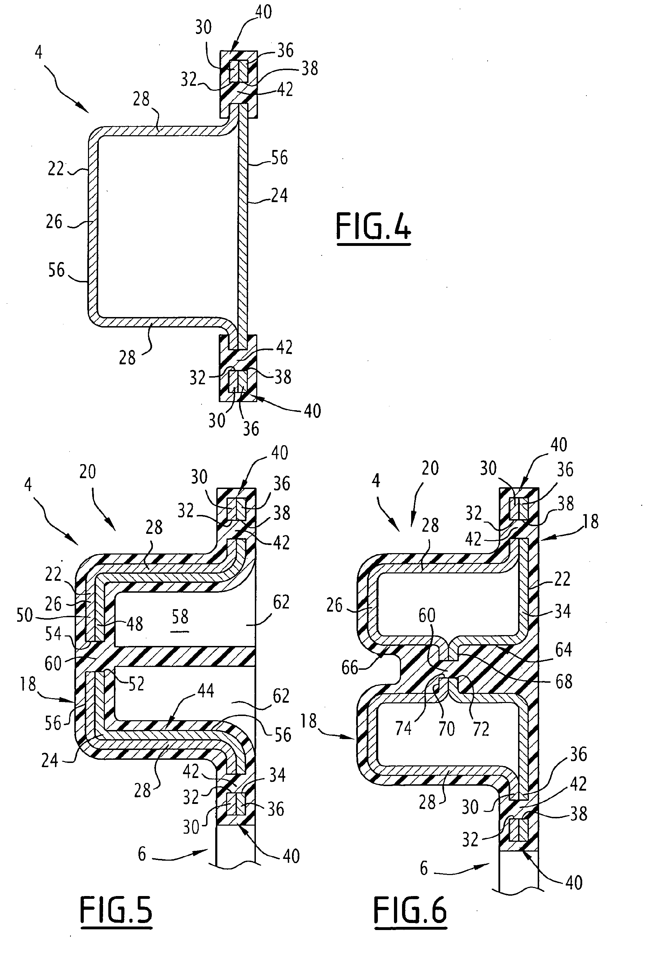

En se référant à la figure 4, les tôles 22 et 24 sont liées entre elles par l'intermédiaire de joints en matière plastique 40 recouvrant les bords 30, 36 en contact, chaque joint 40 comprenant des rivets de matière plastique 42, chaque rivet 42 traversant deux orifices 32 et 38 correspondants.

En revenant à la figure 3, la tôle 34 comprend, au droit de chaque tronçon 20, une partie 44 renfoncée vers l'intérieur de la structure en caisson.

Chaque partie 44 est en contact par une zone 48, constituant le fond de la partie 44, avec une zone en regard 50 de l'âme 26.

Chaque zone 48 est munie d'orifices 52, par exemple au nombre de quatre, situés au moins en partie en regard d'orifices 54 de la zone 50 correspondante.

Chaque partie 44 délimite, sur une surface 56 extérieure de la traverse 4, une cavité 58 ouverte vers l'arrière.

En se référant à la figure 5, chaque partie 44 est en complémentarité de forme avec la tôle 22, et est emboîtée dans cette dernière en étant en contact avec les ailes 28 et la base 26. La structure en caisson ne subsiste qu'en dehors des tronçons 20.

En variante, une partie 44 est en contact seulement avec l'âme 26, et la structure en caisson subsiste dans le tronçon 20 correspondant, avec une forme différente en section.

Comme cela est mieux visible sur la figure 5, la portion de liaison 18 de chaque montant 6 entoure extérieurement le tronçon 20 correspondant. Les tôles 22 et 24 enserrées par la portion de liaison 18 sont ainsi maintenues l'une contre l'autre.

Dans l'exemple illustré, chaque portion de liaison 18 recouvre la surface extérieure 56 du tronçon 20 correspondant, et forme une enveloppe de matière à contour fermé autour de celui-ci.

En variante, chaque portion de liaison 18 forme plusieurs anneaux à contour fermé entourant le tronçon 20 correspondant.

La portion de liaison 18 comprend de rivets de matière plastique 60 traversant les orifices 52, 54 pour fixer les tôles 22 et 24 entre elles.

L'ensemble d'ossature 2 est particulièrement léger du fait que les montants 6 sont réalisés en matière plastique 6.

L'accrochage de chaque portion de liaison 18 sur la traverse 4 est particulièrement rigide et résistant du fait que chaque portion de liaison 18 entoure le tronçon 20 correspondant, et inclut les rivets 60. La rigidité et la résistance sont encore améliorées du fait que la portion de liaison 18 pénètre dans la cavité 58.

Les joints 40 sont venus de matière avec les portions de liaison 18. Ceci améliore encore la rigidité et la résistance de la fixation des portions de liaison 18 sur la traverse 4.

Chaque portion de liaison 18 comprend des nervures de renfort 62 s'étendant dans la cavité 58 correspondante, pour augmenter la rigidité de la traverse 4 dans chaque tronçon 20.

Les montants 6 et les joints 40 sont avantageusement et facilement formés lors d'une même opération de surmoulage par injection de matière plastique sur les tôles 22 et 24 préalablement positionnées l'une par rapport à l'autre. Un tel procédé de fabrication est rapide et peu coûteux.

Le positionnement relatif des tôles 22 et 24 est facilité par les parties 44 qui s'emboîtent dans la tôle 22.

Lors du surmoulage, la matière plastique ne pénètre pas à l'intérieur de la traverse 4, mais traverse les orifices 52 et 54, et passe directement d'un côté à l'autre de la traverse 4. Le surmoulage est donc simplifié, car il n'est pas nécessaire de prévoir des parties de moules insérées à l'intérieur de la traverse 4 pour empêcher la matière plastique de s'écouler à l'intérieur de la traverse 4.

Dans une variante illustrée sur la figure 6, chacune de l'âme 26 et de la tôle 34 est munie d'une partie renfoncée 64, 66 dans le tronçon 20, les parties renfoncées 64, 66 étant en contact l'une avec l'autre par leurs fonds 68, 70 respectifs, munis d'orifices 72, 74 en regard. La portion de liaison 18 s'étend dans les parties renfoncées 64, 66 et traverse les orifices 72, 74. Les parties renfoncées 64, 66 sont remplies par la matière plastique de la portion de liaison 18.

L'invention s'applique de façon générale à tout ensemble d'ossature de véhicule automobile comprenant au moins deux éléments structurels fixés l'un sur l'autre, c'est-à-dire deux éléments formant une membrure de l'ensemble d'ossature.

## Revendications

1. Ensemble d'ossature (2) pour véhicule automobile, du type comprenant :
- au moins un élément structurel métallique (4) possédant au moins deux tôles (22, 24) délimitant entre elles une structure en caisson allongé de section transversale fermée, au moins une (24) des tôles (22, 24) comprenant une partie renfoncée (44 ; 64, 66) vers l'intérieur de la structure en caisson comprenant une zone (48, 68) en contact avec une zone (50, 70) en regard de l'autre tôle (22), les deux zones en contact (48, 50 ; 68, 50) possédant des orifices (52, 54 ;72, 74) en regard ; et
- au moins un corps en matière plastique (60) traversant les orifices (52, 54 ; 72, 74) pour lier les tôles (22, 24) entre elles ;
**caractérisé en ce qu'**il comprend au moins un élément structurel en matière plastique (6) comprenant une portion de liaison (18) entourant extérieurement la structure en caisson au droit des zones en contact (48, 50 ; 68, 70) de façon à lier l'élément structurel en matière plastique (6) et l'élément structurel métallique (4) entre eux, le corps en matière plastique (60) étant venu de matière avec la portion de liaison (18).

2. Ensemble d'ossature (2) selon la revendication 1, **caractérisé en ce que** chaque tôle (22, 24) comprend une partie renfoncée (64, 66), les parties renfoncées (64, 66) des tôles (22, 24) étant en contact mutuel et munies d'orifices (72, 74) en regard traversés par un corps en matière plastique (60) de liaison venu de matière avec la portion de liaison (18).

3. Ensemble d'ossature (2) selon la revendication 1 ou 2, **caractérisé en ce que** la ou chaque partie renfoncée (44) définit une cavité ouverte (58) sur une surface externe (56) de la structure en caisson, la portion de liaison (18) comprenant des nervures de renfort (62) s'étendant à l'intérieur de la cavité (58).

4. Ensemble d'ossature (2) selon l'une quelconque des revendications précédentes, **caractérisé en ce que** les zones en contact (48, 50) possèdent une pluralité d'orifices (52, 54) correspondant en regard, les orifices (52, 54) de chaque paire d'orifices correspondants étant traversés par un corps en matière plastique (60) de liaison venu de matière avec la portion de liaison (18).

5. Ensemble d'ossature selon l'une quelconque des revendications précédentes, **caractérisé en ce qu'**il comprend des rivets en matière plastique (42) venus de matière avec la portion de liaison (18), et traversant des orifices (32, 38) ménagés dans des bords en contact des tôles (22, 24) s'étendant le long de la structure en caisson, pour lier les tôles (22, 24) entre elles.

6. Véhicule automobile comprenant un ensemble d'ossature (2) selon l'une quelconque des revendications précédentes.
